Europäisches Patentamt

European Patent Office

Office européen des brevets

(19)

(11) Publication number: **0 094 686**
**B1**

# EUROPEAN PATENT SPECIFICATION

(12)

(45) Date of publication of patent specification: **24.08.88**

(51) Int. Cl.⁴: **H 02 J 7/14, F 02 B 67/04**

(21) Application number: **83104911.9**

(22) Date of filing: **18.05.83**

(54) **Charge control arrangement for vehicle.**

(30) Priority: **19.05.82 JP 86061/82**

(43) Date of publication of application:
**23.11.83 Bulletin 83/47**

(45) Publication of the grant of the patent:
**24.08.88 Bulletin 88/34**

(84) Designated Contracting States:
**DE FR GB**

(56) References cited:
**EP-A-0 010 449**
**FR-A-2 427 724**
**FR-A-2 485 293**
**GB-A-2 052 121**
**US-A-4 305 254**

**COMPUTER DESIGN, vol. 19, no. 5, May 1980,
pages 86,91,94,98,100,102,106,108,109,
Concord, US; S. GROVES: "Controllers come of
age"**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Morishita, Mitsuharu c/o Mitsubishi
Denki K. K.**
**Himeji Works No. 840, Chiyoda-cho
Himeji-shi Hyogo (JP)**
Inventor: **Kouge, Shinichi c/o Mitsubishi Denki
K. K.**
**Himeji Works No. 840, Chiyoda-cho
Himeji-shi Hyogo (JP)**

(74) Representative: **Lehn, Werner, Dipl.-Ing. et al
Hoffmann, Eitle & Partner Patentanwälte
Arabellastrasse 4
D-8000 München 81 (DE)**

(56) References cited:
**1974 IEEE INTERCON TECHNICAL PAPERS,
26th-29th March 1974, session 36, paper 36/1,
pages 1-6, IEEE, New York, US; R.B. HOOD:
"Electronic penetration in autos - systems on
wheels"**

Courier Press, Leamington Spa, England.

## Description

This invention relates to a charge control arrangement for a vehicle having an engine comprising:

a charging generator coupled to be driven by the output of said engine;

a battery connected to be charged by an output voltage of said charging generator;

a voltage regulator for controlling the output voltage of said charging generator to a predetermined value;

a display unit for displaying detection data, including fault detection data, from said charge control microcomputer; and

a charge control microcomputer for processing engine data from said engine and charge system data including terminal voltage data from said battery and generated voltage data from said charging generator to provide a reference voltage for said voltage regulator, and for detecting charging system faults according to said charge system data. Such an arrangement is known from EP—A—0010449. A predetermined (reference) value of the voltage regulator for controlling the output voltage of the generator is externally set, and failures are detected according to data received from various points in the charge system.

In general, in a conventional device of this type, the output of a charging generator driven by an internal combustion engine of a vehicle or the like is controlled to a predetermined value, so as to charge the battery of the vehicle. However, the conventional device suffers from a drawback in that, where the predetermined value is controlled during acceleration or deceleration of the engine to thereby control the output of the generator, which is the mechanical load of the engine, it is difficult to control the output externally, and in that the occurrence of problems in the charging system, for instance, when the charging generator generates no power, or is not controlled at all, and the first rectifier output terminal is disconnected, cannot be detected.

A conventional charging generator generally employs a drive system wherein the generator is driven, with a certain speed change ratio, through a belt or the like by the internal combustion engine. However, this system is disadvantageous in that the output current and efficiency of the charging generator vary with the speed of the engine; the output current is insufficient at the low speed operation of the engine, and is saturated at high speeds, thus increasing the loss of power.

It is also known from FR—A—2485293 to interpose a speed-change gear between an engine and a generator. However, in this known system, control is performed partly in dependence upon engine speed and partly in dependence upon system load. At low engine speeds, the generator is allowed to turn slowly, thus providing a low output current, unless the power demand is exceptionally high. If the power demand is high, the transmission ratio is changed to speed up the generator. No provision is made however for decoupling the generator from the engine.

From FR—A—2 427 724 is known the coupling of the generator to the engine through slip clutch means only for controlling the generator speed, which cannot provide for a very efficient control.

An object of the invention is to provide a charge control arrangement for a vehicle which can control the generator output more efficiently.

According to the invention, the arrangement defined in the first paragraph of this specification is characterised by:

speed changing means for transmitting the output torque of the engine to said generator;

said speed changing means including a slip clutch means controllable as to engagement, disengagement or slippage amount thereof by an operating instruction, from said charge control microcomputer;

said speed changing means further including a speed change gear for changing the transmission ratio and receiving the output of said slip clutch means, the output of said speed change gear being coupled to said charging generator;

said speed change gear receiving a transmission ratio instruction signal from said charge control microcomputer to control the transmission ratio thereof;

an engine controlling microcomputer for receiving data from said engine, to control said engine; and

the charge control microcomputer being arranged for receiving said engine data from said engine controlling microcomputer and for processing an engine speed signal, forming at least a part of said engine data, to generate said operating instruction for said speed changing means, so that said charging generator is driven within an appropriate range of revolutions per minute or is disengaged from drive by the engine.

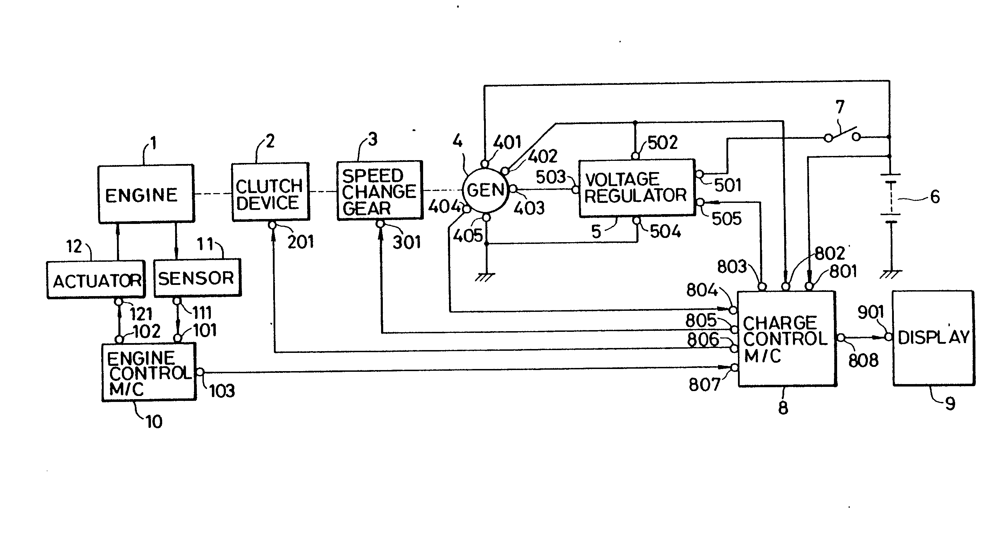

One embodiment of the invention will now be described by way of example, with reference to the accompanying drawings, the single figure of which illustrates a charge control arrangement according to one embodiment of the invention.

An internal combustion engine 1 is installed in a vehicle. A clutch device 2 transmits output torque of the engine 1; an input terminal 201 receives an operating instructions (as to engagement, disengagement or slip) from a charge control microcomputer 8 (described later); a speed change gear 3 is provided for changing the speed of the engine transmitted through the clutch device 2 and transmitting the speed thus changed; an input terminal 301 receives a transmission ratio instruction from the charge control microcomputer 8; and a charging generator 4 is driven by the speed change gear 3. A first rectifier output terminal 401 and a second rectifier output terminal 402 are provided. Furthermore, the figure illustrates a field coil output terminal 403; a neutral point voltage output terminal 404 through which generated voltage data is obtained from the neutral point of star-connected armature coils (not shown); a ground terminal 405; a voltage regulator 5 for controlling the output voltage of the generator 4 to a predetermined value; the regulator 5 having an initial excitation terminal 501, a voltage detection terminal 502, a field coil input terminal 503, a ground terminal 504 and an external control input terminal 505.

Furthermore, the figure illustrates a battery 6 which provides battery terminal voltage data; a key switch 7; the aforementioned charge control microcomputer 8; a battery terminal voltage input terminal 801; a second rectifier output terminal voltage input terminal 802; a reference signal output terminal 803 through which an external control reference signal is applied to the external control input terminal 505 of the voltage regulator 5; a neutral point voltage input terminal 804; a transmission ratio instruction output terminal 805 through which a transmission ratio instruction is applied to the speed change gear 3; an output terminal 806 for applying an operating instruction to the clutch device 2; and an input terminal 807 for receiving data from an engine controlling microcomputer 10.

Furthermore, the figure illustrates the aforementioned engine controlling microcomputer 10 for receiving engine data, for example, the intake air temperature, r.p.m., crank angle, exhaust gas temperature, air fuel mixing ratio, etc.; from the engine 1, to control the engine 1; an input terminal 101 for receiving a signal from a sensor 11 (described later); an engine control signal output terminal 102; an output terminal 103 for applying data to the microcomputer 8; the aforementioned sensor 11 for detecting the engine state and applying the detection signal to the engine controlling microcomputer 10, an actuator 12 for receiving a control signal from the microcomputer 10, to mechanically drive a part of the engine 1; and a control signal input terminal 121.

The operation of the device thus arranged will now be described.

When the key switch 7 is closed to start the engine 1, a loop circuit made up of the battery 6, the key switch 7, the initial excitation terminal 501 and the voltage detection terminal 502 of the voltage regulator 5, the second rectifier output terminal 402 of the charging generator 4, the field coil of the generator 4 connected to the field coil output terminal 403, and the field coil input terminal and the ground terminal 504 of the voltage regulator 5 is completed. As a result, an initial exciting current flows in the field coil and a field magnetomotive force is induced. In this operation, the terminal voltage of the battery 6 is applied through the key switch 7 to the microcomputers 8 and 10, and, when necessary, to the clutch device 2, the speed change gear 3, the sensor 11 and the actuator 12, to operate these elements.

When, in this condition, the engine 1 is started, the engine controlling microcomputer 10 processes a rotation (r.p.m.) signal, which is one of the engine input parameters received thereby, and outputs this value to the charge control microcomputer 8 which applies an operating instruction as to engagement, disengagement or slip through the output terminal 806 to the clutch device 2, and applies an acceleration or deceleration ratio instruction through the output terminal 805 to the speed change gear 3, so that the charging generator is driven within an optimum, predetermined range of r.p.m. at all times.

The charge control microcomputer 8 processes the engine data from the engine controlling microcomputer 10, and charge system data including battery terminal voltage data and generated voltage data, so as to calculate and apply a reference voltage value most suitable for the engine 1 and the charge system to the voltage regulator 5 through the reference signal output terminal 803. When the charging generator 4 produces no power or is not controlled at all, or the first rectifier output terminal is disconnected, the charge control microcomputer 8 detects the occurrence of this problem on the basis of data from various points in the charge system, and applies the detection signal to the display unit 9, so that the problem or fault thus detected is displayed thereon.

As was described in detail above, in the device of the invention, a clutch device and a speed change device are arranged between the engine and a charging generator and are controlled by a charge control microcomputer with processes engine data, the battery terminal voltage data and the generated voltage data, so that the charging generator is driven within an optimum, predetermined range of r.p.m. at all times. Accordingly, problems caused by the variation in speed of the charging generator, such as an insufficient output in the low speed operation range of the engine, or the increase of loss in the high speed range, are eliminated. Thus, the charging generator can be operated under optimum conditions.

Furthermore, in the invention, the charge control microcomputer processes engine data and charging system data to determine the reference voltage for the voltage regulator. Therefore, the invention has the effect that the most suitable reference voltage is determined for the charging of the battery and the mechanical load can be readily controlled during acceleration or deceleration of the engine.

Moreover, in the device of the invention, the occurrence of a charging system problem is detected according to data from various points in the charging system and the results of this detection are displayed. Accordingly, for instance, when the charging generator produces no power or is not controlled at all and the first rectifier output terminal is disconnected, such problems can be detected by the device of the invention, unlike the conventional device. In addition, the problem can be displayed on the display unit according to the content thereof which contributes to a reduction in the required repair time.

In the above-described embodiment of the invention, the generated voltage data is obtained from the neutral point 404 of the armature coils of the charging generator 4; however, it may be obtained from the second rectifier output terminal 402 or a one-phase output terminal of the armature coil assembly with the same effect.

## Claims

1. A charge control arrangement for a vehicle having an engine comprising:

a charging generator (4) coupled to be driven by the output of said engine;

a battery (6) connected to be charged by an output voltage of said charging generator (4);

a voltage regulator (5) for controlling the output voltage of said charging generator to a predetermined value;

a display unit (9) for displaying detection data, including fault detection data, from said charge control microcomputer; and

a charge control microcomputer (8) for processing engine data from said engine and charge system data including terminal voltage data from said battery (6) and generated voltage data from said charging generator (4) to provide a reference voltage for said voltage regulator, and for detecting charging system faults according to said charge system data,

characterised by:

speed changing means (2, 3) for transmitting the output torque of the engine to said generator;

said speed changing means (2, 3) including a slip clutch means (2) controllable as to engagement, disengagement or slippage amount thereof by an operating instruction, from said charge control microcomputer (8);

said speed changing means further including a speed change gear (3) for changing the transmission ratio and receiving the output of said slip clutch means (2), the output of said speed change gear (3) being coupled to said charging generator (4);

said speed change gear (3) receiving a transmission ratio instruction signal from said charge control microcomputer (8) to control the transmission ratio thereof;

an engine controlling microcomputer (10) for receiving data from said engine, to control said engine; and

the charge control microcomputer (8) being arranged for receiving said engine data from said engine controlling microcomputer (10) and for processing an engine speed signal, forming at least a part of said engine data, to generate said operating instruction for said speed changing means (2, 3) so that said charging generator (4) is driven within an appropriate range of revolutions per minute or is disengaged from drive by the engine.

2. A vehicle having an engine (1) characterised by a charge control arrangement according to claim 1.

## Patentansprüche

1. Ladekontrolleinrichtung für ein Fahrzeug mit einem Motor, mit einem Ladegenerator (4), der zum Antrieb mit dem Ausgang des Motors gekoppelt ist;

einer Batterie (6), die zum Laden mit einer Ausgangsspannung des Ladegenerator (4) beaufschlagt ist;

einem Spannungsregler (5) zum Regeln der Ausgangsspannung des Ladegenerators auf einen vorbestimmten Wert;

einer Anzeigeeinheit (9) zum Anzeigen von Erfassungsdaten, einschließlich Fehlererfassungsdaten, von dem Ladekontroll-Mikrorechner; und

einem Ladekontroll-Mikrorechner (8) zum Verarbeiten von Motordaten von dem Motor und von Ladesystemdaten, einschließlich Anschlußspannungsdaten von der Batterie (6), und von erzeugten Spannungsdaten von dem Ladegenerator (4), um eine Bezugsspannung für den Spannungsregler vorzusehen, und um Ladesystemfehler entsprechend den Ladesystemdaten zu erfassen,

gekennzeichnet durch

Geschwindigkeitsänderungsmittel (2, 3), zum Übertragen des Ausgangsdrehmoments des Motors auf den Generator, wobei die

Geschwindigkeitsänderungsmittel (2, 3) Schlupfkupplungsmittel (2) enthalten, die bezüglich deren Einrücken, Ausrücken, bzw. Schlupfwert durch einen Betätigungsbefehl von dem Ladekontroll-Mikrorechner (8) steuerbar sind;

wobei die Geschwindigkeitsänderungsmittel weiter ein Geschwindigkeitsänderungsgetriebe (3) zum Ändern des Übersetzungsverhältnisses und zum Empfangen des Ausgangs der Schlupfkupplungsmittel (2) aufweisen und der Ausgang der Geschwindigkeitsänderungsgetriebe (3) mit dem Ladegenerator (4) verbunden ist;

wobei die Geschwindigkeitsänderungsgetriebe (3) ein Übersetzungsverhältnis-Befehlssignal von dem Ladekontroll-Mikrorechner (8) empfängt, um dessen Übersetzungsverhältnis zu regeln;

einen Motorkontroll-Mikrorechner (10) zum Empfangen von Daten von dem Motor, um den Motor zu regeln,

wobei der Ladekontroll-Mikrorechner (8) zum Empfangen von Motordaten von dem Motorkontroll-Mikrorechner (10) und zum Verarbeiten eines Motorgeschwindigkeitssignals, das wenigstens einen Teil der Motordaten bildet, angeordnet ist, um den Betätigungsbefehl für die Geschwindigkeitsänderungsmittel (3) zu erzeugen, so daß der Ladegenerator (4) innerhalb eines geeigneten Bereichs der Umdrehungen pro Minute angetrieben ist oder vom Antrieb durch den Motor gelöst ist.

2. Fahrzeug mit einem Motor (1), gekennzeichnet, durch eine Ladekontrolleinrichtung nach Anspruch 1.

## Revendications

1. Dispositif de contrôle de charge pour un véhicule comportant un moteur comprenant:

un générateur de charge (4) couplé pour être commandé par la sortie du moteur;

une batterie (6) connectée pour être chargée par une tension de sortie du générateur de charge (4);

un régulateur de tension (5) pour régler la tension de sortie du générateur de charge à une valeur prédéterminée;

une unité d'affichage (9) pour afficher des données de détection, incluant des données de détection de défaut, provenant du microordinateur de contrôle de charge; et

un micro-ordinateur de contrôle de charge (8) pour traiter des données de moteur provenant du moteur et des données de système de charge incluant une donnée de tension de borne provenant de la batterie (6) et une donnée de tension engendrée provenant du générateur de charge (4) afin de fournir une tension de référence au régulateur de tension, et pour détecter des défauts de système de charge selon les données de système de charge,

caractérisé par:

un moyen de changement de vitesse (2, 3) pour transmettre le couple de sortie du moteur au générateur;

ledit moyen de changement de vitesse (2, 3) incluant un moyen d'embrayage à patinage (2) commandable par une instruction de fonctionnement relative en quantité à un embrayage, à un débrayage ou à un patinage, provenant du micro-ordinateur de contrôle de charge (8);

le moyen de changement de vitesse incluant en outre un mécanisme de changement de vitesse (3) pour changer le rapport de transmission et pour recevoir le couple de sortie du moyen d'embrayage à patinage (2), la sortie du mécanisme de changement de vitesse (3) étant couplée au générateur de charge (4);

le mécanisme de changement de vitesse (3) recevant un signal d'instruction de rapport de transmission du micro-ordinateur de contrôle de charge (8) pour régler son rapport de transmission;

un micro-ordinateur de commande de moteur (10) pour recevoir des données du moteur, afin de commander le moteur; et

le micro-ordinateur de contrôle de charge (8) étant agencé pour recevoir les données de moteur du micro-ordinateur de commande de moteur (10) et pour traiter un signal de vitesse de moteur, constituant au moins une partie des données de moteur, afin de générer l'instruction de fonctionnement pour le moyen de changement de vitesse (2, 3), de sorte que le générateur de charge (4) est commandé dans une gamme approprié de tours par minute ou qu'il est libéré d'une commande par le moteur.

2. Véhicule comportant un moteur (1) caractérisé par un dispositif de contrôle de charge selon la revendication 1.

DISPLAY 9

CHARGE CONTROL M/C 8

VOLTAGE REGULATOR 5

GEN 4

SPEED CHANGE GEAR 3

CLUTCH DEVICE 2

ENGINE 1

SENSOR 11

ACTUATOR 12

ENGINE CONTROL M/C 10